Europäisches Patentamt

(19) European Patent Office

Office européen des brevets

(11) Numéro de publication : **0 066 091**
**B1**

(12) **FASCICULE DE BREVET EUROPÉEN**

(45) Date de publication du fascicule du brevet :
09.10.85

(21) Numéro de dépôt : **82103582.1**

(22) Date de dépôt : **27.04.82**

(51) Int. Cl.⁴ : **B 23 B 27/14**

(54) **Plaquette de coupe pour usinage par enlèvement de copeaux.**

(30) Priorité : 19.05.81 CH 3247/81

(43) Date de publication de la demande :
08.12.82 Bulletin 82/49

(45) Mention de la délivrance du brevet :
09.10.85 Bulletin 85/41

(84) Etats contractants désignés :
**AT BE DE FR GB IT LU NL SE**

(56) Documents cités :
**DE-A- 2 231 631**
**DE-A- 2 309 443**
**GB-A- 2 004 477**
**US-A- 4 214 846**

(73) Titulaire : **STELLRAM S.A.**
**Route de l'Etraz**
**CH-1260 Nyon, Vaud (CH)**

(72) Inventeur : **Bonjour, Christian**
**17, Chemin de Prélaz**
**CH-1260 Nyon, Vaud (CH)**
Inventeur : **Hauser, Charles**
**En Nuyerattes**
**CH-1261 Genolier, Vaud (CH)**

(74) Mandataire : **Micheli, Michel-Pierre et al**
**MICHELI & CIE 118, Rue du Rhône Case Postale 47**
**CH-1211 Genève 6 (CH)**

Jouve, 18, rue St-Denis, 75001 Paris, France

## Description

La présente invention concerne des plaquettes de coupe pour usinage par enlèvement de copeaux comportant au moins une arête de coupe, un nez et un brise-copeaux. Ces plaquettes de coupe sont de préférence indexables et peuvent présenter une forme carrée, triangulaire, rhombique ou autre.

Il est connu que les plaquettes utilisées pour la coupe, ou pour l'usinage par enlèvement de copeaux, de pièces métalliques ou autres, doivent être munies de brise-copeaux, exécutés généralement sous la forme de gorges ou rainures le long des arêtes de coupe, afin de favoriser le contrôle desdits copeaux. Toutefois, les exigences actuelles concernant le contrôle des copeaux et notamment leur fragmentation, pour faciliter d'une part l'évacuation desdits copeaux et pour augmenter d'autre part la sécurité d'emploi des outils, obligent à étudier les outils dans leur globalité, afin de satisfaire à ces exigences et, de plus, de diminuer la consommation d'énergie au cours du travail desdits outils. Il est également connu que ce brise-copeaux peut être de largeur variable et comporter dans sa section transversale une ou plusieurs parties, droites ou incurvées, variables en fonction de leur position le long de l'arête de coupe.

La gorge brise-copeaux présente généralement une remontée sur l'arrière, vers l'intérieur de la plaquette, au niveau de l'arête. Ceci est valable lorsqu'on se trouve dans un domaine de faibles profondeurs et de faibles avances, le copeau étant alors relativement mince et étroit. Le copeau va ainsi remonter le long de l'arrière de la gorge pour être brisé et rendre la plaquette utilisable dans cette zone. Dans le domaine des fortes profondeurs et fortes avances par contre, la section du copeau est importante et la remontée sur l'arrière mentionnée précédemment est un handicap, gênant le bon écoulement du copeau vers une fragmentation naturelle.

La plaquette de coupe décrite dans le brevet DE-A-2 231 631 par exemple présente une gorge brise-copeaux périphérique remontant vers l'intérieur en formant la partie centrale de la plaquette, cette partie centrale étant plane et donc de niveau constant par rapport au fond de la gorge brise-copeaux. Dans le fond de cette gorge sont disposées en outre des saillies en forme de bossages. On connaît également d'autres types de plaquettes de coupe présentant des saillies de forme partiellement sphérique, qui sont disposées soit sur la rampe périphérique que présentent ces plaquettes entre l'arête de coupe ou un listel associé à celle-ci et une dépression plane centrale soit dans cette dépression elle-même. De telles plaquettes, décrites notamment dans les brevets DE-A-2 309 443 et GB-A-2 004 477, ne présentent donc pas à proprement parler de gorge brise-copeaux.

Les solutions précitées ne sont pas révélées satisfaisantes en pratique pour résoudre le problème présenté plus haut. Par conséquent, le but de cette invention consiste à fournir une plaquette de coupe du type mentionné précédemment améliorée dont la plage d'utilisation dans le domaine des fortes profondeurs de passe et des fortes avances soit augmentée.

La plaquette de coupe pour usinage par enlèvement de copeaux selon l'invention comportant au moins deux arêtes de coupe séparées par un nez et un brise-copeaux formé par une gorge située le long des arêtes de coupe et délimitée vers l'intérieur de la plaquette par des parois remontantes, qui vise à atteindre le but ci-dessus, est caractérisée par le fait que la plaquette comporte un talon formé par les parois remontantes du brise-copeaux et une surface supérieure dont la hauteur par rapport au fond de la gorge va en décroissant selon une pente continue à partir du nez et en direction du centre de la plaquette et dont la largeur augmente à partir du sommet du talon jusqu'au niveau de la région intérieure de la plaquette, cette région intérieure étant plus basse que les arêtes de coupe.

Le dessin annexé illustre schématiquement et à titre d'exemple l'invention.

La figure 1 est une vue latérale partielle d'une première réalisation d'une plaquette de coupe selon l'invention.

La figure 2 est une vue de dessus de la portion de plaquette illustrée sur la figure 1.

La figure 3 est une vue de dessus partielle d'une seconde réalisation d'une plaquette de coupe selon l'invention.

Les figures 4 à 6 sont des vues en coupe selon les lignes I-I, II-II et III-III respectivement de la figure 3.

Les figures 7A et 7B sont des vues en coupe selon la ligne IV-IV de la figure 3 et sous la forme de deux autres variantes.

La figure 8 représente une courbe en sac théorique.

La figure 9 représente deux courbes en sac superposé obtenues respectivement pour une plaquette de coupe standard et pour une plaquette de coupe selon l'invention avec talon décroissant.

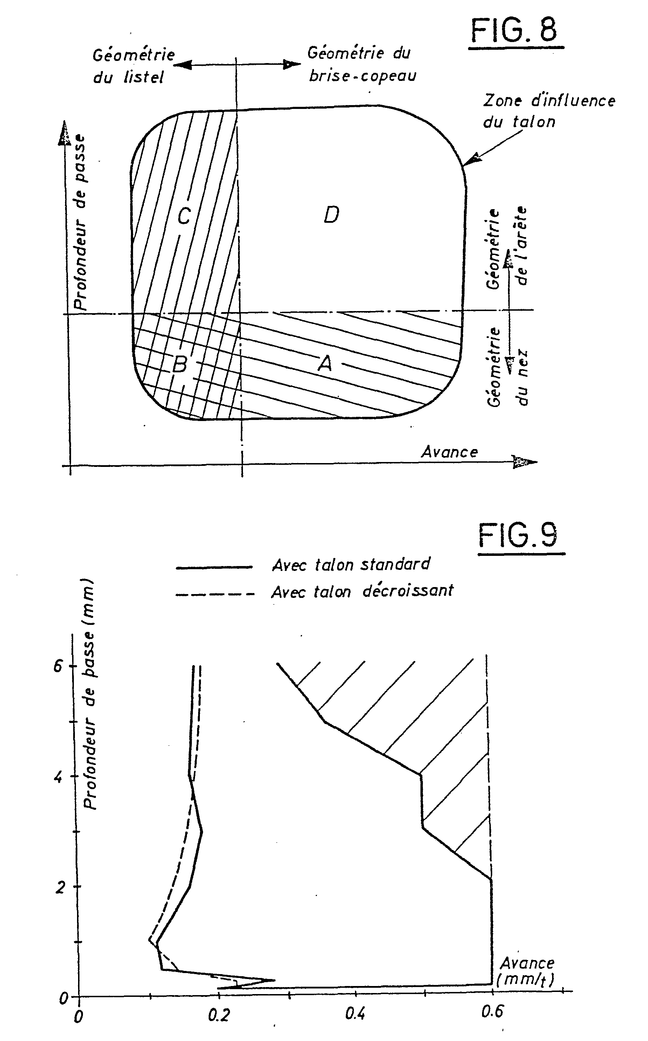

Le domaine d'utilisation d'une plaquette est défini par ce que l'on appelle une courbe en sac, qui est un domaine dans l'espace des profondeurs de passe, des avances et des vitesses, généralement mesuré à vitesse constante, à l'intérieur duquel la plaquette fragmente et contrôle le copeau correctement. Ce domaine, tel que défini sur la figure 8, peut être divisé en quatre sous-domaines principaux, chacun de ces sous-domaines étant contrôlé et généré principalement par une des parties de la plaquette.

Le but mentionné précédemment de la présente invention consiste donc à élargir le domaine D de la courbe en sac.

Pour cela, il convient que, vers le milieu de l'arête de coupe, le copeau soit moins gêné, et par conséquent que la hauteur du talon soit diminuée, voire annulée.

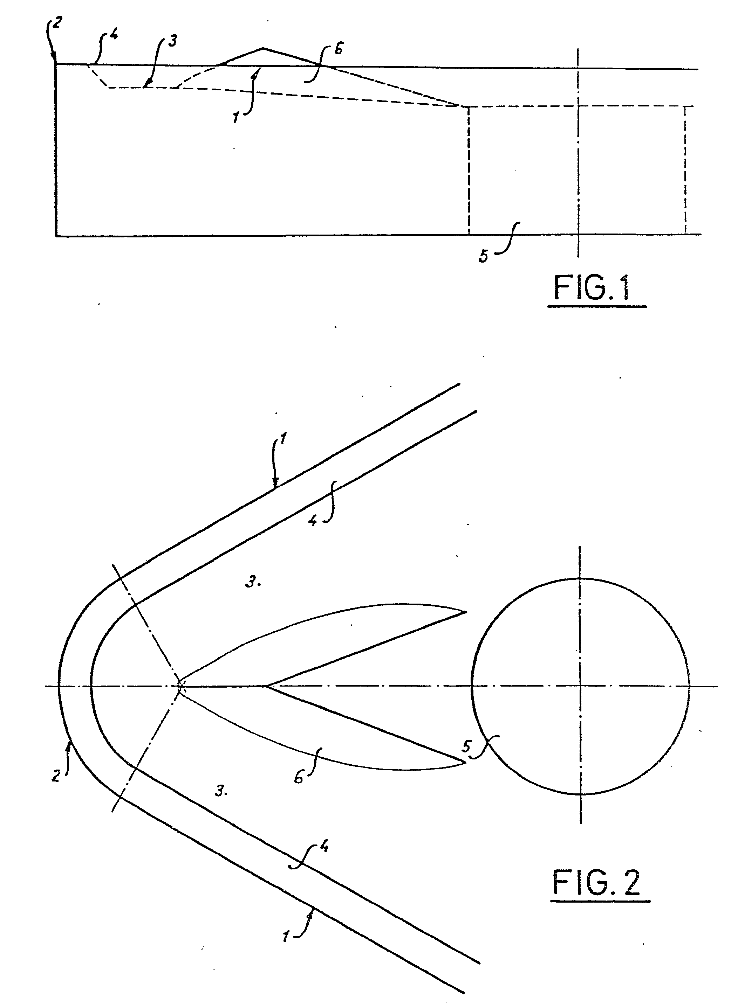

Sur les figures 1 et 2 est illustrée une partie d'une plaquette de coupe triangulaire indexable comportant une arête de coupe 1 présentant deux portions rectilignes séparées par une portion arrondie formant un nez ou bec 2, un brise-copeaux 3 et un listel 4 situé entre le brise-copeaux 3 et l'arête de coupe 1. En arrière du nez 2, en direction du centre de la plaquette constitué ici par un orifice traversant 5 destiné à recevoir un élément de fixation, est disposé un talon 6. La partie avant de ce talon 6, proche du nez est formée par les parois de la gorge brise-copeaux 3 (voir figure 1) remontant vers une surface supérieure située au niveau de l'arête de coupe ou légèrement au-dessus, puis décroît vers l'arrière, c'est-à-dire vers le centre de la plaquette, selon une pente continue. Dans cette réalisation, le talon 6 présente également un rétrécissement latéral en direction du centre de la plaquette, de manière à dégager complètement celui-ci pour permettre l'évacuation et la fragmentation des copeaux.

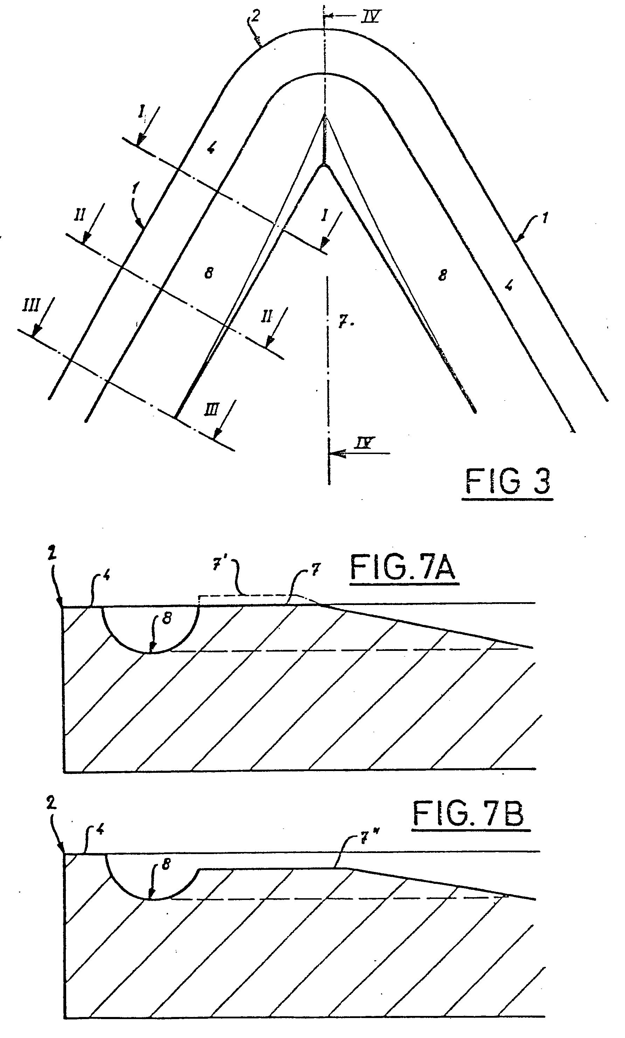

La seconde réalisation de la plaquette de coupe illustrée à la figure 3 comporte un talon 7 ne présentant pas de rétrécissement latéral en direction du centre de la plaquette, et délimitant ainsi une gorge brise-copeaux 8 dont les rebords supérieurs sont parallèles.

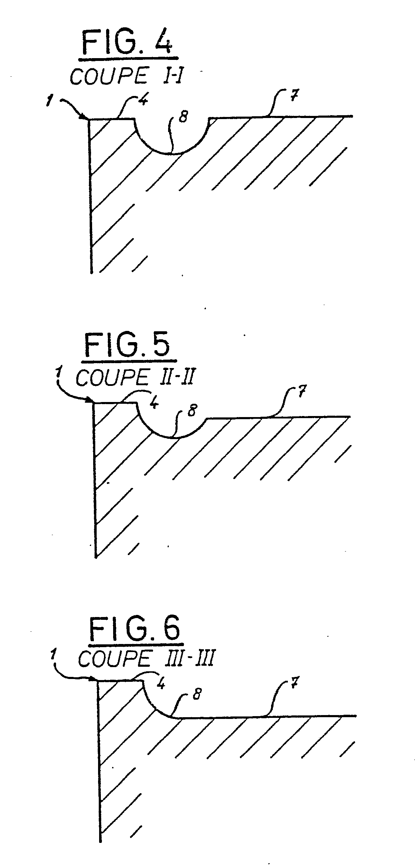

Les coupes selon les lignes I-I à IV-IV de la figure 3 illustrées respectivement sur les figures 4 à 7A montrent d'une part que la paroi du talon 7 délimitant la gorge 8 est relativement abrupte et d'autre part que vers le centre de l'arête de coupe 1 le talon 7 atteint une valeur nulle, c'est-à-dire rejoint le fond de la gorge brise-copeaux 8.

Sur la figure 7A est également illustrée en pointillé une première variante du talon 7' dont le niveau supérieur est situé au-dessus de celui de l'arête de coupe 1. La figure 7B illustre elle une seconde variante du talon 7'' dans laquelle le niveau supérieur de celui-ci est au-dessus du niveau de l'arête de coupe 1.

Ainsi, le talon 7, respectivement 7' et 7'', présente une pente décroissante en direction du centre de la plaquette, de manière à créer une dépression vers l'arrière laissant aux copeaux la liberté de s'évacuer et de se fragmenter.

L'effet de ce talon décroissant est visible sur les courbes en sac réparties sur la figure 9 et obtenues avec une plaquette standard avec talon constant d'une part et avec un talon décroissant d'autre part. On peut en effet constater sur cette figure 9 que le resserrement du domaine D de la courbe en sac avec talon constant disparaît lorsque l'on passe à un talon variable. Il a en outre été constaté qu'avec la plaquette de coupe selon l'invention, avec talon décroissant vers le centre, les efforts de coupe sont inférieurs à ceux nécessaires avec un talon constant.

Ainsi, la présente invention apporte d'une part une augmentation du domaine d'utilisation de la plaquette de coupe et d'autre part une diminution de la puissance absorbée par cette plaquette au cours du travail d'usinage.

L'augmentation du domaine d'utilisation peut encore être étendue si l'on combine le talon décroissant selon la présente invention avec un listel présentant une inclinaison variable passant d'une inclinaison positive ou nulle sur le nez ou à proximité de celui-ci à une inclinaison nulle ou négative le long de l'arête de coupe, comme décrit dans la demande de brevet européen publiée EP 0 065 124 au nom de la même titulaire.

**Revendications**

1. Plaquette de coupe pour usinage par enlèvement de copeaux, comportant au moins deux arêtes de coupe (1) séparées par un nez (2), et un brise-copeaux formé par une gorge (3, 8) située le long des arêtes de coupe et du nez et délimitée vers l'intérieur de la plaquette par des parois remontantes, caractérisée par le fait que la plaquette comporte un talon (6, 7) formé par les parois remontantes du brise-copeaux et une surface supérieure dont la hauteur par rapport au fond de la gorge va en décroissant selon une pente continue à partir du nez et en direction du centre de la plaquette et dont la largeur augmente à partir du sommet du talon jusqu'au niveau de la région intérieure de la plaquette, cette région intérieure étant plus basse que les arêtes de coupe.

2. Plaquette de coupe selon la revendication 1, caractérisée par le fait que le sommet du talon est au-dessus (7'), à la même hauteur (7) ou au-dessous (7'') de l'arête de coupe.

3. Plaquette selon la revendication 1 ou la revendication 2, caractérisée par le fait que la largeur et/ou la profondeur de la gorge brise-copeaux est variable le long de l'arête de coupe.

**Claims**

1. Cutter bit for machining by chip removal, comprising at least two cutting edges (1) separated by a nose (2) and a chip-breaker formed by a throat (3, 8) disposed along the cutting edges and the nose and bounded toward the interior of the bit by rising walls, characterized by the fact that the bit comprises a heel (6, 7) formed by the rising walls of the chip-breaker and by an upper surface, the height of which with regards to the bottom of the throat declines according to a continuous slope from the nose and in the direction of the center of the bit, and the width of which increases from the top of the heel toward the level of the inner area of the bit, said inner area being lower than the cutting edges.

2. Cutter bit according to claim 1, characterized by the fact that the upper level of the heel is above (7'), at the same height as (7) or below (7'') the cutting edges.

3. Bit according to claim 1, characterized by the fact that the width and/or the depth of the chip-breaking throat varies along the cutting edges.

## Patentansprüche

1. Schneidkeil für die spanabhebende Bearbeitung mit wenigstens zwei durch eine Nase (2) getrennten Schneidkanten (1) und einem durch eine längs der Schneidkanten und der Nase liegende und gegen das Innere des Schneidkeils durch ansteigende Fasen begrenzte Kehle (3, 8) gebildeten Spanzerreißer, dadurch gekennzeichnet, daß der Schneidkeil einen durch die ansteigenden Fasen des Spanzerreißers gebildeten Grat (6, 7) und eine obere Fläche aufweist, deren Höhe bezüglich des Bodens der Kehle gemäß einer von der Nase in Richtung des Mittelpunktes des Schneidkeils verlaufenden stetigen schiefen Ebene abnimmt und deren Breite ausgehend von der Spitze des Grates bis zur Höhe der Innenfläche des Schneidkeils zunimmt, wobei die Innenfläche tiefer als die Schneidkanten liegt.

2. Schneidkeil nach Anspruch 1, dadurch gekennzeichnet, daß die Spitze des Grates überhalb (7'), auf derselben Höhe (7) oder unterhalb (7") der Schneidkante liegt.

3. Schneidkeil nach Anspruch 1 oder 2, dadurch gekennzeichnet, daß die Breite und/oder die Tiefe der spanzerreißenden Kehle längs der Schneidkante veränderlich ist.

0 066 091

FIG.1

FIG.2

1

FIG 3

FIG.7A

FIG.7B

## FIG. 4
### COUPE I-I

## FIG.5
### COUPE II-II

## FIG. 6
### COUPE III-III

**0 066 091**

FIG. 8

Géométrie du listel — Géométrie du brise-copeau

Zone d'influence du talon

Profondeur de passe

Géométrie de l'arête

Géométrie du nez

C  D

B  A

Avance

FIG.9

——— Avec talon standard

– – – Avec talon décroissant

Profondeur de passe (mm)

Avance (mm/t)

4